Europäisches Patentamt

European Patent Office

Office européen des brevets

(19)

(11) EP 0 606 177 B1

(12) **FASCICULE DE BREVET EUROPEEN**

(45) Date de publication et mention
de la délivrance du brevet:
**19.11.1997 Bulletin 1997/47**

(51) Int Cl.$^6$: **G01S 17/88**

(21) Numéro de dépôt: **94400011.6**

(22) Date de dépôt: **04.01.1994**

(54) **Système de conduite assistée par ordinateur pour véhicule automobile avec prédiction de collisions éventuelles**

Rechnergestütztes Steuerungssystem für Kraftfahrzeuge mit Vorhersage von möglichen Kollisionen

Computer aided driving system for automative vehicle with prediction of potential collisions

(84) Etats contractants désignés:
**DE ES GB IT**

(30) Priorité: **06.01.1993 FR 9300047**

(43) Date de publication de la demande:
**13.07.1994 Bulletin 1994/28**

(73) Titulaire: **VALEO VISION**
**93000 Bobigny (FR)**

(72) Inventeur: **Albou, Pierre**
**F-75013 Paris (FR)**

(74) Mandataire: **Martin, Jean-Jacques et al**
**Cabinet REGIMBEAU**
**26, Avenue Kléber**
**75116 Paris (FR)**

(56) Documents cités:
**EP-A- 0 340 735**      **EP-A- 0 490 029**
**GB-A- 2 139 445**      **US-A- 4 876 444**

## Description

La présente invention est relative à un système de conduite assistée par ordinateur pour un véhicule automobile capable d'effectuer une prédiction de collision du véhicule automobile avec un ou plusieurs objets mobiles - tels que d'autres véhicules automobiles - ou non - tels que des véhicules à l'arrêt (par exemple faisant barrage à la circulation à la suite d'un accident de la route, surtout d'un accident survenu pendant la nuit), des murs ou autres. Ce système permet de préciser éventuellement l'intervalle de temps, à partir de la détection des objets, dans lequel risque d'avoir lieu cette collision probable et, donc, l'instant de cette dernière, de manière à alerter le conducteur. Ce dernier peut ainsi prendre, le cas échéant, toute disposition nécessaire à prévenir une telle collision en contrôlant le véhicule en fonction de la distance le séparant du (ou des ) objet(s) précité (s) ainsi détecté(s) en temps utile.

Compte tenu du nombre élevé de victimes des accidents de la route, on a proposé différents systèmes assurant au conducteur d'un véhicule automobile le contrôle de ce dernier - tant de nuit que de jour - face à un obstacle dont le conducteur s'aperçoit trop tardivement pour lui permettre de réagir, et donc de l'éviter.

On connaît déjà un système, décrit dans la demande de brevet **EP-A-0 455 524**, qui se propose d'atteindre ce but par des moyens améliorant indirectement la vision de nuit et de jour du conducteur. Ce système connu comprend un projecteur émettant un faisceau lumineux polarisé dans le spectre proche infrarouge et ayant une portée supérieure à la portée des feux correspondants ; ces projecteurs coopèrent chacun avec une caméra, sensible au spectre infrarouge et associée à un filtre infrarouge. Un ensemble de traitement des images détectées par la caméra dans le champ visé par celle-ci restitue ces images sur un moyen de visualisation, tel qu'un écran situé à proximité du conducteur.

Afin d'éviter que la caméra soit éblouie par les projecteurs d'un autre véhicule, celle-ci est équipée d'un polariseur infrarouge monté devant son objectif et le projecteur est équipé lui aussi d'un polariseur infrarouge dont la polarisation est orientée perpendiculairement à celle de la caméra.

Toutefois, ce système est d'une conception relativement lourde, et ce à cause notamment de la présence d'au moins une caméra spéciale, et ne tient compte que d'obstacles frontaux par rapport au sens de marche d'un véhicule donné, c'est-à-dire qu'il est incapable de prendre en considération des obstacles surgissant latéralement par rapport au sens de marche du véhicule.

La conduite assistée par ordinateur, - **CAO** -, telle qu'appliquée aux véhicules automobiles, a déjà été proposée, mais l'art antérieur en limite l'application au contrôle de l'environnement interne, c'est-à-dire du fonctionnement des parties essentielles de l'équipement d'un véhicule automobile.

Toutefois, - au moins à la connaissance de la Demanderesse - la **CAO** n'a jamais été utilisée pour assister un conducteur dans le contrôle d'un véhicule automobile par rapport à l'environnement externe.

Aussi, le problème technique qui est à la base de la présente invention consiste à pourvoir à un système de conduite assistée par ordinateur pour un véhicule automobile - c'est-à-dire un système d'assistance d'un conducteur d'un véhicule automobile dans le contrôle de celui-ci par rapport à l'environnement externe au véhicule dans le sens de marche de celui-ci - qui soit capable d'effectuer une prédiction de collision du véhicule automobile, avec un ou plusieurs objets, mobiles ou non, de manière à répondre mieux aux nécessités de la pratique et à satisfaire au moins aux contraintes suivantes :

- insensibilité aux perturbations dues à l'environnement du véhicule, afin d'éviter les fausses alertes qui diminueraient sa crédibilité et finiraient par le rendre inutile ;
- fonctionnement ne perturbant pas l'environnnement et ne compromettant pas le respect des normes et règlements en vigueur ;
- fonctionnement correct par temps de pluie ou de brouillard ;
- portée relativement grande, d'au moins 100 mètres (cette distance étant parcourue en 2 secondes à 180 km/h) ;
- coût relativement faible.

Pour un véhicule automobile, les collisions avec des objets statiques ou quasi-statiques (piétons, bicyclettes, etc.) ne peuvent survenir qu'avec la face avant du véhicule. Ceci revient à exclure la marche arrière - qui sert essentiellement aux manoeuvres de parking - ainsi que les situations de tête-à-queue ou de dérapage. En effet, dans la marche arrière les vitesses sont basses et les collisions avec les objets statiques ou quasi-statiques ont peu de gravité ; au demeurant, les piétons, quant à eux, peuvent le plus souvent éviter le véhicule en marche arrière. En outre, en cas de tête-à-queue et de dérapage, le contrôle du véhicule est généralement difficile et, donc,l'alerte de collision est soit inutile soit intempestive, puisqu'elle risque de diminuer la concentration du conducteur, qui est nécessaire à un contrôle efficace en de telles situations d'urgence.

Ces considérations, conjointement à l'exigence de maintenir relativement faible le prix du système, ont comme conséquence la limitation du champ couvert par le système de prédiction de collision à une portion contenue dans un demi-plan parallèle à la chaussée de la route et disposé en avant (c'est-à-dire orienté dans le sens de marche) du véhicule et ne contenant pas ce dernier, de préférence le demi-plan passant à la hauteur des projecteurs du véhicule dans lesquels le système est avantageusement incorporé.

On connaît déjà par GB-A-2 139 445 un dispositif de détection d'obstacles de type LIDAR, dans lequel on fait varier la couverture angulaire du dispositif en direction latérale, en fonction de la position du volant de direction.

On connaît également par EP-A-0 340 735 un projecteur d'éclairage de véhicule automobile dont on fait varier l'orientation ou la répartition de la lumière verticalement par détection de la distance à un autre véhicule roulant devant dans le même sens.

Il est à noter qu'aucun de ces deux documents n'enseigne un système de conduite assistée tenant compte des variations d'assiette du véhicule.

La présente invention vise également à pallier les limitations des systèmes de ces documents.

Elle a ainsi pour objet un système de conduite assistée par ordinateur pour un véhicule automobile, capable d'effectuer une prévision de collision du véhicule avec au moins un objet - mobile ou non - de l'environnement externe au véhicule, susceptible d'entrer en collision avec le véhicule, comprenant :

- un dispositif de détection de cet objet suivant un plan parallèle à la route parcourue par le véhicule, ce dispositif de détection étant orienté dans le sens de marche du véhicule et engendrant un signal qui est fonction de la distance de l'objet au véhicule ;
- un capteur de variations d'assiette du véhicule engendrant un signal correspondant à chaque variation d'assiette ;
- un actuateur commandé par le signal engendré par le capteur de variations d'assiette et agissant sur le dispositif de détection pour maintenir le plan de détection parallèle à la route, indépendamment des variations d'assiette ;
- des moyens de traitement du signal engendré par le capteur de variation d'assiette et du signal engendré par le dispositif de détection ;
- des moyens de calcul et de gestion du fonctionnement du système, tels qu'un microprocesseur, destinés à calculer la position de l'objet par rapport au véhicule, à partir du signal engendré par le dispositif de détection, tel qu'élaboré par les moyens de traitement ;
- des moyens d'interface avec le conducteur du véhicule automobile, destinés à informer ce dernier de l'existence d'un risque de collision avec l'objet précité.

Quant aux moyens de traitement du signal engendré par le capteur de variations d'assiette du véhicule, ceux-ci sont par exemple du type décrits dans le brevet **EP-A-0 186 571**.

Selon un mode de réalisation préféré du dispositif de détection conforme à l'invention, celui-ci comprend :

- une source de rayonnement électromagnétique modulable en amplitude à haute fréquence ;
- un dispositif d'alimentation de la source de rayonnement ;

- un dispositif de modulation de l'amplitude du rayonnement émis par la source de rayonnement ;
- un dispositif optique assurant la projection du rayonnement modulé émis par cette source sur l'environnement externe au véhicule dans le sens de marche de celui-ci ;
- un dispositif de collecte, suivant le plan de détection, du rayonnement modulé réfléchi par l'objet de l'environnement irradié par la source ;
- une pluralité de capteurs du rayonnement modulé réfléchi ainsi collecté, ces capteurs étant alignés suivant un segment disposé en amont du dispositif de collecte et contenu dans le plan de détection transversalement par rapport au sens de marche du véhicule, chaque capteur de rayonnement visant dans le plan de détection (et de collecte) un angle préfixé de visée partielle de l'environnement, de manière à capter le rayonnement réfléchi suivant une direction comprise dans cet angle de visée partielle, et engendrant un signal qui est fonction de la position de l'objet sur lequel le rayonnement s'est réfléchi, c'est-à-dire de sa distance par rapport au véhicule.

L'adoption d'une source de rayonnement d'ondes électromagnétiques, ayant des fréquences relativement élevées et des longueurs d'onde rendant le brouillard transparent à ce rayonnement, notamment constitué par un rayonnement infrarouge et de préférence - pour des raisons de coût - correspondant au proche infrarouge, permet de satisfaire également aux autres contraintes déjà évoquées plus haut.

Avantageusement, les moyens de traitement qui traitent le signal engendré par le dispositif de détection comprennent :

- une pluralité d'amplificateurs, chacun associé à un capteur du rayonnement modulé réfléchi,
- un dispositif de démodulation du signal engendré par chaque capteur du rayonnement réfléchi et ainsi amplifié, ce dispositif de démodulation recevant aussi le signal de sortie du dispositif de modulation précité et mesurant le déphasage existant entre ce dernier signal et le signal amplifié engendré par chaque capteur du rayonnement réfléchi,

les moyens de gestion et calcul, constitués notamment par un microprocesseur, déduisant la position de l'objet susceptible d'entrer en collision avec le véhicule à partir de la mesure de déphasage précitée, tout en gérant l'ensemble des opérations du système.

Conformément à l'invention, on adopte les dispositions préférées suivantes :

- une diode laser, comme source de rayonnement électromagnétique modulable en amplitude à haute fréquence, parce qu'une telle diode permet d'obtenir dans un volume réduit une source puissante modulable jusqu'à plus de 1 GH$_Z$ ;

- des lentilles de focalisation du rayonnement émis par la diode laser, comme dispositif de projection de ce rayonnement sur l'environnement externe au véhicule, dans le sens de marche de celui-ci ;

- un amplificateur de courant de puissance, comme dispositif d'alimentation de la diode laser ;

- un oscillateur électronique, dont la sortie est reliée à l'entrée de l'amplificateur de courant de puissance, comme dispositif de modulation du rayonnement émis par la diode laser ;

- une boîte très aplatie et en forme d'entonnoir, comme dispositif de collecte, suivant le plan de détection précité, du rayonnement réfléchi, ce plan faisant plan de symétrie de cet entonnoir aplati de collecte, l'angle d'ouverture de ce dernier correspondant à un angle préfixé (pouvant atteindre une valeur comprise entre 120° et 180°) de visée globale de l'environnement externe au véhicule, réparti parmi la pluralité de capteurs de rayonnement précités, alors que l'orifice de sortie de l'entonnoir présente des dimensions compatibles avec les problèmes de diffraction aux longueurs d'onde du rayonnement adopté ;

- une pluralité de cellules photo-électriques, comme capteurs du rayonnement modulé réfléchi, sensibles à une gamme de fréquences compatibles avec la source laser, les cellules étant disposées sur une barrette et leur nombre étant fonction - pour un angle préfixé de visée partielle affecté à chaque cellule - de la largeur transversale de l'environnement, par rapport au sens de marche du véhicule, qu'on veut viser par chaque cellule, à une distance donnée du véhicule, cette largeur étant définie dans le plan de détection ;

- un démodulateur synchrone pour démoduler le signal capté par l'une ou l'autre des cellules.

Avantageusement, les moyens de traitement qui traitent le signal engendré par le dispositif de détection comprennent, entre la pluralité d'amplificateurs associée à la pluralité de cellules et le démodulateur synchrone, un multiplexeur analogique, contrôlé par les moyens de gestion et calcul (microprocesseur) et assurant - sans aucune pièce mobile - un balayage de l'environnement suivant le plan de détection (et de collecte) et sur l'angle de visée globale précité.

Conformément à l'invention, le capteur de variations d'assiette du véhicule et l'actuateur susdits sont de préférence constitués par les éléments correspondants d'un dispositif de correction automatique de l'orientation d'au moins un projecteur du véhicule automobile en fonction des variations d'assiette, par exemple du type décrit dans le brevet **EP-A-0186571**. En fait, la fonction d'un tel correcteur est de maintenir constante la position des projecteurs (ou des réflecteurs associés) par rapport à la route parcourue par le véhicule. Cela signifie qu'il suffit de solidariser le dispositif de détection et de mesure conforme à la présente invention à un projecteur dans une position telle qu'il vise le plan de détection précité en conditions normales : toute modification de l'assiette du véhicule sera corrigée par le dispositif correcteur précité et le plan de détection sera donc maintenu automatiquement parallèle à la route parcourue, comme exigé dans le cadre de la présente invention, tout en corrigeant l'orientation des projecteurs, par exemple dans la manière déjà décrite dans le brevet **EP-A-0 186 571** évoqué plus haut.

Bien entendu, le microprocesseur assurera avantageusement non seulement la gestion du fonctionnement des moyens de traitement des différents signaux précités, mais aussi de la commande de l'actuateur du dispositif de détection, et donc du dispositif de correction, dont est équipé également le véhicule.

Quant à l'interface entre le système objet de la présente invention et le conducteur du véhicule, celle-ci peut être tout simplement constituée par une alarme, de préférence sonore et/ou visuelle, déclenchée par le microprocesseur dès que les informations utilisées par celui-ci permettent de considérer une collision comme étant hautement probable, si une intervention appropriée du conducteur n'a pas lieu pour l'éviter, en contrôlant le véhicule en fonction de la distance le séparant de l'objet ainsi détecté en temps utile.

L'invention sera mieux comprise à l'aide du complément de description qui va suivre et qui se rapporte aux dessins annexés donnés à titre d'illustration non limitative, dans lesquels :

- la **Fig. 1** est un schéma à blocs illustrant le principe de fonctionnement du système conforme à l'invention ;

- la **Fig. 2** illustre schématiquement le dispositif de détection d'un objet situé dans l'environnement d'un véhicule automobile et susceptible d'entrer en collision avec celui-ci ;

- la **Fig. 3** illustre schématiquement le mode de réalisation préféré du système de la **Fig. 1** comprenant le dispositif de la **Fig. 2** ;

- la **Fig. 4** illustre un schéma de principe d'un démodulateur de mesure de déphasage ;

- la **Fig. 5** est une vue éclatée en perspective illustrant les composants principaux du système selon l'invention, - illustrés schématiquement, dans leur ensemble ou en détail, dans les figures précédentes - et dans laquelle les mêmes éléments portent les mêmes références utilisées dans les autres figures.

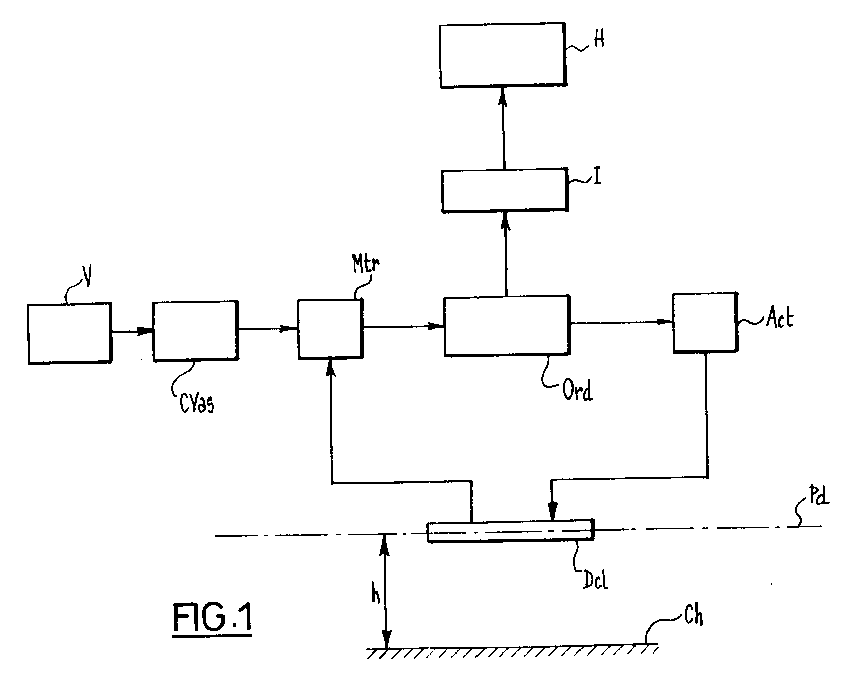

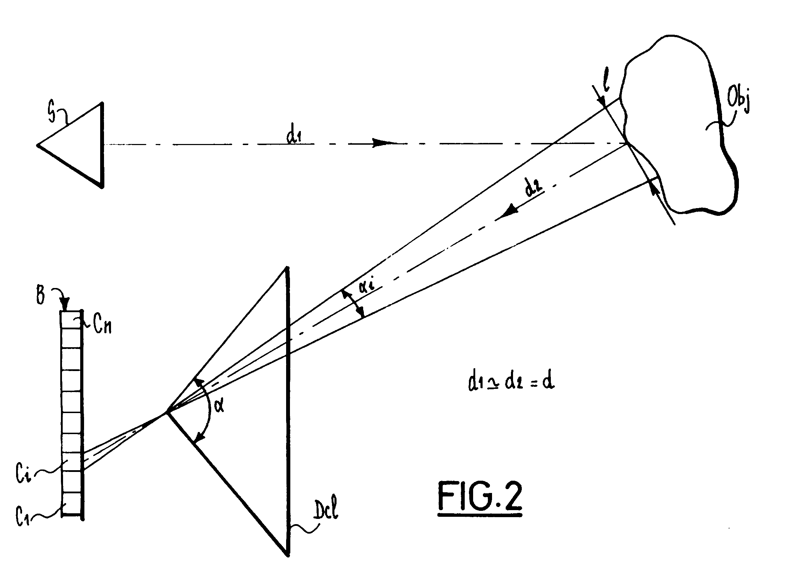

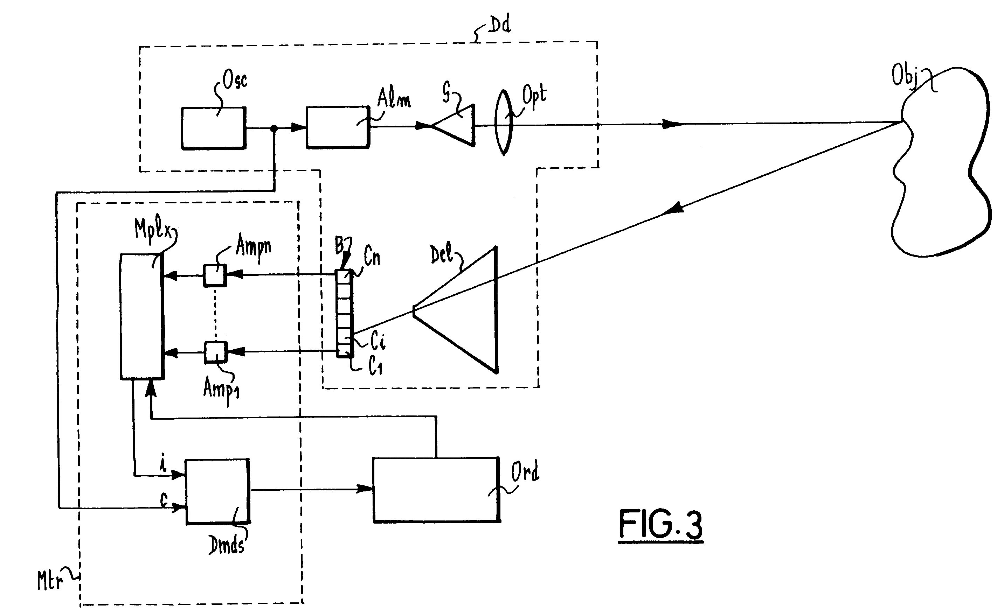

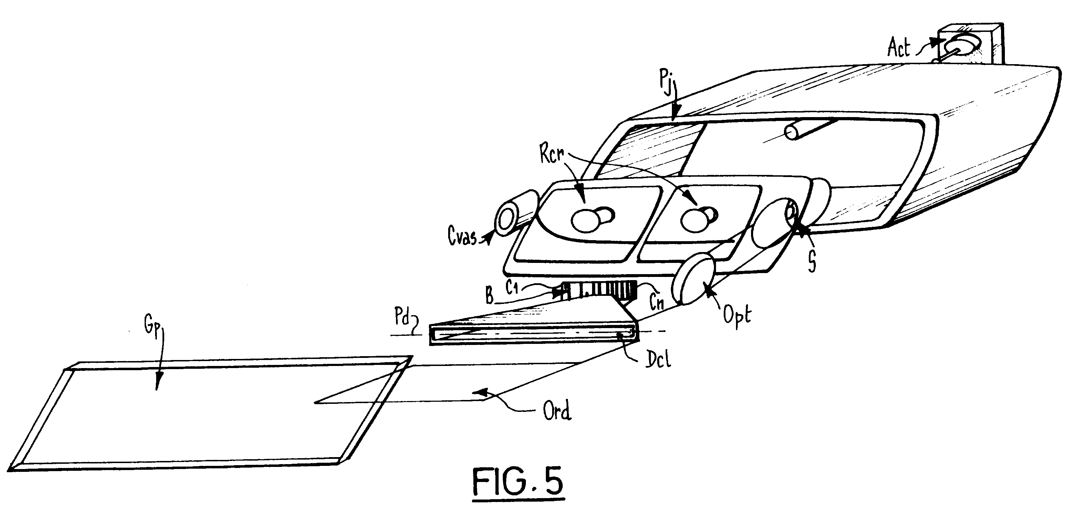

On se réfère d'abord à la **Fig. 1** (cf. aussi la **Fig. 5**), qui représente schématiquement le principe de fonctionnement du système **CAO** conforme à la présente invention, où le bloc désigné par **Dd** correspond au dispositif de détection d'objets (ou corps), mobiles ou non, de l'environnement - surtout immédiat - d'un véhicule automobile **V**, susceptibles d'entrer en collision avec le véhicule. Pour limiter le coût du dispositif **Dd**, et donc du système dans son ensemble, à un prix raisonnable, l'analyse (ou sondage) de l'environnement précité est de préférence à effectuer dans un plan - dit plan de détection **Pd** - parallèle à la chaussée (ou route) **Ch** parcourue par le véhicule et orienté dans le sens de marche de celui-ci. Bien entendu, la hauteur **h** de ce plan **Pd** par rapport à la chaussée **Ch** doit être comprise à l'intérieur de l'encombrement vertical du véhicule **V** et, de préférence, être placée au niveau des projecteurs, dont l'emplacement correspond à une hauteur **h** convenable au-dessus du sol **Ch**. Ce dispositif **Dd** sera décrit en détail en rapport avec la **Fig. 2** et la **Fig. 3**. A ce stade de la description, il suffit de préciser que le signal correspondant à la détection d'au moins un objet **Obj** est élaboré par des moyens de traitement, désignés par **Mtr**, qui coopèrent avec des moyens **Ord** de gestion du fonctionnement du système et de calcul destinés à calculer la position, notamment en coordonnées polaires (distance **d** par rapport au véhicule et angle du vecteur distance par rapport à une direction de référence solidaire du véhicule) à l'aide par exemple de logiciels appropriés, comme il sera précisé plus loin, et qui déduisent, à partir de ce calcul, l'exclusion ou la prise en compte d'une éventuelle collision du véhicule avec l'objet, déclenchant dans ce dernier cas un signal visuel et/ou audio, par l'intermédiaire d'une interface **I** - telle qu'un écran situé à proximité du conducteur et/ou une alarme, respectivement, - à l'adresse du conducteur **H**, qui est ainsi informé très rapidement, et donc suffisamment à temps, pour qu'il puisse contrôler le véhicule de façon appropriée à éviter la collision (freinage, changement de direction, etc.), et ce en principe dans le respect de la distance de sécurité grâce à l'action rapide du système **CAO**, qui permet de détecter à distance - de façon pratiquement instantanée - la présence d'objets faisant potentiellement obstacle à la circulation normale d'un véhicule.

Pour éviter de détecter des obstacles fictifs, tels que des branches d'arbres ou autres, lorsque l'assiette du véhicule est inclinée, par suite d'un chargement déséquilibré du véhicule, d'une accélération brusque, etc. (à cet égard, il suffit de remarquer que, par exemple, à 100 m, une variation d'inclinaison de 1°, par rapport à la position normale de l'assiette du véhicule, et donc du plan de détection **Pd**, parallèle à la chaussée **Ch**, donne un changement de la hauteur de l'horizon visé, par rapport à la hauteur de ce plan, de 1,75 m) et de négliger des obstacles réels, il est prévu un capteur **Cvas** de variations d'assiette du véhicule, dont le signal est élaboré par les moyens de traitement **Mtr** pour commander un actuateur **Act**, - sous validation des moyens de gestion et calcul **Ord**, constitués par exemple par un microprocesseur -, agissant sur le dispositif de détection d'objets (dont on a représenté la partie correspondant au dispositif de collecte **Dcl** qui sera décrit par la suite, cf. aussi la **Fig. 2** et la **Fig. 3**) dans le sens d'assurer une visée toujours suivant un plan de détection **Pd** parallèle à la chaussée **Ch**.

De préférence, le capteur **Cvas** de variations d'assiette et l'actuateur **Act** précités correspondent à ceux dont se compose un dispositif de correction automatique de l'orientation d'au moins un projecteur **Pj** (protégé par sa propre glace **Gp**) ou du réflecteur code et route correspondant **Rcr** (cf. la **Fig. 5**) d'un véhicule automobile en fonction des variations d'assiette, tel que décrit dans le brevet **EP-A-0 186 571**, comme déjà précisé plus haut, dont le véhicule est également équipé.

Etant donné que le dispositif correcteur de ce brevet est limité à la circulation nocturne, on peut avantageusement concevoir, dans le cadre de la présente invention, une conception applicable à la fois à circulation nocturne et à la circulation diurne. A cet effet, il suffit de prévoir une variante par rapport au brevet européen évoqué ci-dessus comprenant comme source d'irradiation de la chaussée non pas les feux de circulation mais une source supplémentaire de rayonnement électromagnétique, notamment à infrarouge et plus particulièrement agissant dans le proche infrarouge, modulé à haute fréquence.

Avantageusement, cette source peut consister en la même source **S** utilisée dans le système **CAO** conforme à la présente invention, telle qu'elle sera décrite en rapport avec le dispositif de détection **Dd**.

En ce qui concerne ce dispositif de détection **Dd** d'un objet **Obj** (cf. la **Fig. 2** ainsi que la **Fig. 3**), il comporte, dans sa conception la plus simple :

- une source **S** de rayonnement électromagnétique modulé avec des fréquences relativement élevées et auquel le brouillard est transparent ; il s'agit notamment de rayonnement infrarouge et de préférence correspondant au proche infrarouge ;
- un dispositif optique **Opt** assurant la projection du rayonnement émis par la source **S** sur l'environnement du véhicule dans le sens de marche de celui-ci, ce dispositif $O_{pt}$ étant constitué notamment par une lentille "étalant" le faisceau infrarouge émis par cette source **S** ;
- un dispositif de collecte **Dcl** dans (ou suivant) le plan de détection **Pd**, parallèle à la chaussée **Ch**, du rayonnement modulé réfléchi par les objets **Obj** de l'environnement du véhicule irradiés par la source **S**, c'est-à-dire capable d'éliminer les rayons réfléchis qui se trouvent en dehors du plan de détection **Pd** : dans sa réalisation la plus simple, ce dispositif **Dcl** comporte une boîte sous forme d'entonnoir très aplati, dont le plan de symétrie coïncide avec le plan de détection **Pd** et l'angle d'ouverture correspond à un angle préfixé de visée globale de l'environnement extérieur au véhicule et orienté dans le sens de marche de celui-ci. Cet angle de visée globale est théoriquement compris de préférence entre 120° et 180° pour prendre en considération non seulement les obstacles frontaux, mais également les objets mobiles surgissant latéralement par rapport au sens de marche du véhicule et susceptibles eux aussi d'entrer en collision avec celui-ci. Toutefois, de telles valeurs pour cet angle posent des problèmes de réalisation pratique du dispositif **Dcl**. Au demeurant, des études statistiques des constructeurs automobiles ont montré qu'un angle d'ouverture proche de 20° conviendrait (la plupart des accidents, qu'un système anti-collision visé à éviter, sont dus à des objets présents sur la chaussé ou à son voisinage immédiat). Dans la **Fig. 2** on a représenté la situation idéale dans laquelle l'entonnoir aplati de collecte du rayonnement réfléchi présente un orifice de passage de ce rayonnement très petit, - théoriquement un point -, mais il est clair que les dimensions de cet orifice doivent être compatibles avec les problèmes de diffraction aux longueurs d'onde du rayonnement adopté : c'est la raison pour laquelle sur la **Fig. 3** on a représenté schématiquement cet orifice comme ayant des dimensions tenant compte de ces problèmes ;

- une pluralité de **$\underline{n}$** capteurs du rayonnement modulé réfléchi constitués par des cellules photoélectriques $c_l$, ... $c_i$ .... $c_n$ alignées entre elles et disposées dans une barrette contenue dans le plan de détection **Pd**, transversalement au sens de la marche du véhicule, chaque cellule visant l'environnement suivant un angle de visée partielle $\alpha_i = \alpha/n$, qui est une fraction de l'angle $\alpha$ de visée globale précité : le rayonnement modulé réfléchi par l'objet **Obj** et collecté suivant (ou dans) le plan **Pd** (qui, dans la **Fig. 3**, coïncide avec le plan du dessin) est capté par une cellule $c_i$ qui engendre un signal correspondant à la position de l'objet **Obj** ;

- des amplificateurs **$Amp_l$**, ... **$Amp_n$** destinés à amplifier les signaux délivrés par les cellules photoélectriques.

Etant donné qu'en pratique la distance entre la source et les cellules est négligeable par rapport aux distances $d_1$ et $d_2$ de la source et des cellules à l'objet **Obj,** respectivement, on peut confondre ses distances.

Soit **d** la valeur commune adoptée pour ses distances, c'est-à-dire la distance de l'objet **Obj** au véhicule, et **f** la fréquence de modulation du signal émis par la source **S**, le déphasage $\omega t = 2\pi f t$ entre le signal émis et le signal capté (**t** étant le temps nécessaire au rayonnement pour couvrir la distance $d_1 + d_2$ à la vitesse de la lumière $c_o$) par une cellule est donné par :

$$\omega t = 2\pi f(d_1 + d_2)/co = 4 \pi f \, d/c_o \text{ radiants.}$$

Avec **f** = 5 MHz, une distance de 100 m correspond à un déphasage d'environ 21°.

Or, le déphasage peut être obtenu à l'aide d'un démodulateur synchrone **Dmds**, tel qu'il sera décrit plus loin, ce qui permet de calculer la distance **d**, à l'aide notamment des moyens de gestion et calcul **Ord,** à partir de la formule ci-dessus. De façon plus précise, les moyens **Ord** sont capables d'effectuer une poursuite de cible (constituée par l'objet détecté) et une prédiction de trajectoire et collision éventuelle en utilisant, en plus des informations fournies par les mesures précitées, l'information correspondant à la vitesse du véhicule, de manière à distinguer les objets fixes des objects mobiles en leur appliquant des seuils d'alerte différents (c'est-à-dire en les traitant différemment). A cet effet, les moyens **Ord** sont équipés d'un logiciel approprié capable de permettre au système **CAO** d'identifier les objets présents dans le champ du dispositif de détection et de maintenir cette identification pendant plusieurs mesures successives, de manière à pouvoir estimer les trajectoires des objets de l'environnement détectés, c'est-à-dire à effectuer le calcul du vecteur vitesse relative de façon plus précise, les mesures de distance, associées à l'angle de la direction de visée de chaque cellule donnent les coordonnées polaires des objets de l'environnement situés au premier plan, étant donné que certains objets peuvent être cachés par d'autres ; à cet effet, l'identification - ou détection - et le suivi des objets sur plusieurs mesures successives est indispensable pour calculer les vecteurs vitesse nécessaires à l'estimation de la trajectoire. Des algorithmes de suivi de cible pour ce faire sont connus, notamment dans le domaine des radars des systèmes d'armes ou des radars de gestion de la circulation aérienne, et peuvent être appliqués sous forme simplifiée à la détection de collision.

En ce qui concerne la largeur **l(d)** de la zone transversale de la route surveillée par chaque cellule **$c_i$**, à la distance **d** du véhicule, on a (cf. la **Fig. 2) :**

$$l(d) = 2d \, tg \, (\alpha_i/2) = 2d \, tg \, (\alpha/2n)$$

**n** étant le nombre total de cellules utilisées, qui peut être avantageusement maintenu inférieur à 100 pour que l'encombrement de la barrette correspondante ne soit pas prohibitif en pratique.

La source **S** peut être avantageusement constituée par une diode laser alimentée par un amplificateur de courant de puissance **Alm** recevant à son entrée la sortie d'un oscillateur **Osc** modulant, à la fréquence désirée, le signal délivré par l'amplificateur **Alm**.

Les moyens de traitement **Mtr** des signaux engendrés par les cellules $c_l$, ... $c_n$ comprennent, outre les amplificateurs **$Amp_l$**, ... **$Amp_n$** et le démodulateur synchrone **Dmds**, également un multiplexeur **Mplx** assurant le balayage - sans aucune pièce mobile - de l'environnement du véhicule dans le sens de marche de celui-ci : ce type de balayage est rendu possible par la très grande rapidité des mesures de déphasage de signaux à haute fréquence à l'aide du démodulateur synchrone **Dmds** ; le choix approprié de la fréquence de modulation (au-delà d'1 **MHz** par exemple) assure, lors de la démodulation, l'élimination des composantes des signaux parasites engendrés par les sources naturelles et/ou artificielles externes au véhicule (dans les moyens de traitement **Mtr**, tels qu'illustrés à la **Fig. 3**, on n'a pas représenté la portion qui traite les signaux engendrés par le capteur de variation d'assiette du véhicule et destinés à la commande de l'actuateur commun au dispositif de collecte **Dcl** et au dispositif correcteur précités, parce que cette portion est décrite par exemple dans le brevet **EP-A-0 186 571** déjà évoqué plus haut à plusieurs reprises).

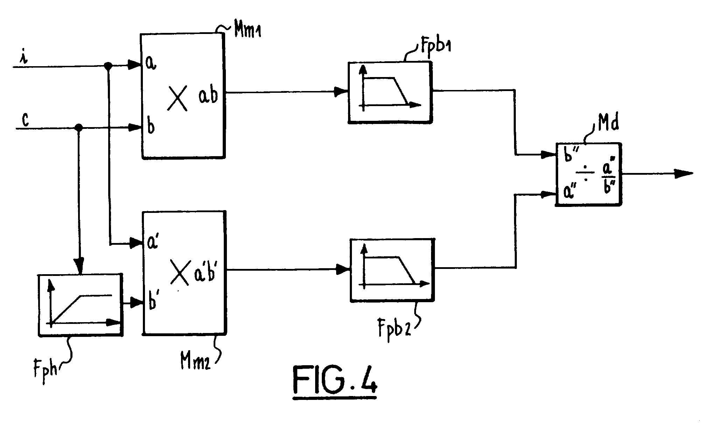

Quant au démodulateur synchrone **Dmds**, capable de donner le déphasage précité, celui-ci peut être réalisé par exemple comme illustré schématiquement à la **Fig. 4**.

Les signaux **i** et **c** (cf. aussi la **Fig. 3**), provenant respectivement du multiplexeur **Mpl** et de l'oscillateur **Osc**, sont traités tels quels dans le bloc multiplicateur **Mm$_1$** et, après introduction d'un déphasage supplémentaire de t/2 - à l'aide d'un filtre passe-haut **Fph** recevant sur son entrée le signal **c** - dans le bloc multiplicateur **Mm$_2$**.

Les signaux présents à la sortie de **Mm$_1$** et **Mm$_2$** sont traités dans le bloc diviseur **Md**, après être passés chacun dans un filtre passe-bas **Fpb$_1$** et **Fpb$_2$**, respectivement. Le signal présent à la sortie du bloc **Md** est proportionnel à la tangente du déphasage entre le signal c et le signal correspondant à la composante du signal **i** à la fréquence du signal c.

## Revendications

1. Système de conduite assistée par ordinateur pour un véhicule automobile (**V**), capable d'effectuer une prévision de collision du véhicule avec au moins un objet (**Obj**) - mobile ou non - de l'environnement externe au véhicule, susceptible d'entrer en collision avec le véhicule, comprenant

   - un dispositif de détection (**Dd**) de cet objet suivant un plan (**Pd**) parallèle à la route (**Ch**) parcourue par le véhicule (**V**), ce dispositif de détection étant orienté dans le sens de marche du véhicule et engendrant un signal qui est fonction de la distance (**d**) de l'objet (**Obj**) au véhicule (**V**) ;
   - un capteur (**Cvas**) de variations d'assiette du véhicule (**V**) engendrant un signal correspondant à chaque variation d'assiette ;
   - un actuateur (**Act**) commandé par le signal engendré par le capteur de variations d'assiette (**Cvas**) et agissant sur le dispositif de détection (**Dd**) pour maintenir le plan de détection (**Pd**) parallèle à la route (**Ch**), indépendamment des variations d'assiette ;
   - des moyens de traitement (**Mtr**) du signal engendré par le capteur de variation d'assiette (**Cvas**) et du signal engendré par le dispositif de détection (**Dd**) ;

   - des moyens de gestion du fonctionnement du système et de calcul (**Ord**) de la position de l'objet (**Obj**) par rapport au véhicule (**V**) à partir du signal engendré par le dispositif de détection (**Dd**), tel qu'élaboré par les moyens de traitement (**Mtr**) ;
   - des moyens d'interface (**I**) avec un conducteur (**H**) du véhicule automobile (**V**), destinés à informer le conducteur (**H**) de l'existence d'un risque de collision avec l'objet précité (**Obj**).

2. Système selon la revendication 1, caractérisé en ce que le dispositif de détection (**Dd**) comprend :

   - une source (**S**) de rayonnement électromagnétique modulable en amplitude à haute fréquence ;
   - un dispositif (**Alm**) d'alimentation de la source de rayonnement (**S**) ;
   - un dispositif de modulation (**Osc**) de l'amplitude du rayonnement émis par la source de rayonnement (**S**) ;
   - un dispositif optique (**Opt**) assurant la projection du rayonnement modulé émis par cette source (**S**) sur l'environnement externe au véhicule (**V**) dans le sens de marche de celui-ci ;
   - un dispositif de collecte (**Dcl**) suivant le plan de détection (**Pd**), du rayonnement modulé réfléchi par l'objet (**Obj**) de l'environnement irradié par la source (**S**) ;
   - une pluralité de capteurs (**c$_l$**... **c$_n$**) du rayonnement modulé réfléchi ainsi collecté, ces capteurs étant alignés suivant un segment (**B**) disposé en amont du dispositif de collecte (**Dcl**) et contenu dans le plan de détection (**Pd**) transversalement par rapport au sens de marche du véhicule, chaque capteur de rayonnement visant dans le plan de détection (**Pd**) un angle ($\alpha_i$) préfixé de visée partielle de l'environnement, de manière à capter le rayonnement réfléchi suivant une direction comprise dans cet angle ($\alpha_i$) de visée partielle, et engendrant un signal qui est fonction de la position de l'objet sur lequel le rayonnement s'est réfléchi, c'est-à-dire de sa distance par rapport au véhicule (**V**).

3. Système selon la revendication 2, caractérisé en ce que les moyens de traitement (**Mtr**) qui traitent le signal engendré par le dispositif de détection (**Dd**) comprennent :

   - une pluralité d'amplificateurs (**Amp$_l$**, ... **Amp$_n$**), chacun associé à un capteur (**c$_l$**, ... **c$_n$**) du rayonnement modulé réfléchi ;
   - un dispositif de démodulation (**Dmds**) du signal engendré par chaque capteur (**c$_l$**, ... **c$_n$**) du rayonnement réfléchi et ainsi amplifié, ce dispositif de démodulation (**Dmds**) recevant aussi le signal de sortie du dispositif de modulation (**Osc**) précité et mesurant le déphasage existant entre ce dernier signal et le signal amplifié engendré par chaque capteur ($c_l$, ... $c_n$) du rayonnement réfléchi,

et en ce que les moyens de gestion et calcul (**Ord**), notamment constitués par un microprocesseur, déduisent la position de l'objet (**Obj**) susceptible d'entrer en collision avec le véhicule (**V**) à partir de la mesure de déphasage précitée, tout en gérant l'ensemble des opérations du système.

4. Système selon la revendication 2 ou 3, caractérisé en ce que le dispositif de détection (**Dd**) comprend :

- une diode laser, comme source (**S**) de rayonnement électromagnétique modulable en amplitude à haute fréquence :
- des lentilles de focalisation du rayonnement émis par la diode laser, comme dispositif optique (**Opt**) de projection de ce rayonnement sur l'environnement externe au véhicule (**V**), dans le sens de marche de celui-ci ;
- un amplificateur de courant de puissance, comme dispositif d'alimentation (**Alm**) de la diode laser ;
- un oscillateur électronique (**Osc**), dont la sortie est reliée à l'entrée de l'amplificateur de courant de puissance (**Alm**), comme dispositif de modulation du rayonnement émis par la diode laser ;
- une boîte très aplatie et en forme d'entonnoir, comme dispositif de collecte (**Dcl**), suivant le plan de détection précité (**Pd**), du rayonnement réfléchi, ce plan faisant plan de symétrie de cet entonnoir aplati de collecte (**Dcl**), l'angle ($\alpha$) d'ouverture de ce dernier correspondant à un angle préfixé de visée globale de l'environnement externe au véhicule (**V**), réparti ($n\,\alpha_i$) parmi la pluralité de capteurs ($c_l$, ... $c_n$) de rayonnement précités, alors que l'orifice de sortie de l'entonnoir de collecte (**Dcl**) présente des dimensions compatibles avec les problèmes de diffraction ;
- une pluralité de cellules photo-électriques, comme capteurs ($c_l$, ... $c_n$) du rayonnement modulé réfléchi, sensibles à une gamme de fréquences compatibles avec la source laser (**S**), les cellules ($c_l$, ... $c_n$) étant disposées sur une barrette (**B**) et leur nombre étant fonction - pour un angle préfixé ($\alpha_i$) de visée partielle affecté à chaque cellule - de la largeur transversale (**nl**) de l'environnement, par rapport au sens de marche du véhicule (**V**), qu'on veut viser par chaque cellule ($c_l$, ... $c_n$), à une distance donnée (**d**) du véhicule et qui est définie dans le plan de détection (**Pd**) ;
- un démodulateur synchrone (**Dmds**) pour démoduler le signal capté par l'une ou l'autre des cellules ($c_l$, ... $c_n$).

5. Système selon la revendication 4, caractérisé en ce que les moyens de traitement (**Mtr**) qui traitent le signal engendré par le dispositif de détection (**Dd**) comprennent, entre la pluralité d'amplificateurs (**Amp$_l$**, ... **Amp$_n$**) associée à la pluralité de cellules ($c_l$, ... $c_n$) et le démodulateur synchrone (**Dmds**), un multiplexeur analogique (**Mplx**), contrôlé par les moyens de gestion et calcul (**Ord**) et assurant un balayage de l'environnement suivant le plan de détection (**Pd**) et sur l'angle de visée globale précité ($\alpha$).

6. Système selon la revendication 5, caractérisé en ce que le capteur (**Cvas**) de variations d'assiette du véhicule et l'actuateur (**Act**) susdits sont constitués par les éléments correspondants d'un dispositif de correction automatique de l'orientation d'au moins un projecteur du véhicule automobile (**V**) en fonction des variations d'assiette.

7. Système selon la revendication 6, caractérisé en ce que les moyens d'interface (**I**) sont constitués par un écran, situé à proximité du conducteur, et/ou une alarme sonore et/ou visuelle, sous le contrôle des moyens de gestion et calcul (**Ord**).

**Patentansprüche**

1. Rechnergestütztes Steuerungssystem für ein Kraftfahrzeug (V), das in der Lage ist, eine Vorhersage zu einer Kollision des Fahrzeugs mit mindestens einem - beweglichen oder unbeweglichen - Objekt (Obj) in der äußeren Umgebung des Fahrzeugs abzugeben, das mit dem Fahrzeug kollidieren könnte, umfassend:

- eine Vorrichtung (Dd) zur Erfassung dieses Objekts entlang einer Ebene (Pd), die parallel zu der vom Fahrzeug (V) befahrenen Straße (Ch) verläuft, wobei diese Erfassungsvorrichtung in der Fahrtrichtung des Fahrzeugs ausgerichtet ist und ein Signal erzeugt, das von der Entfernung (d) des Objekts (Obj) zum Fahrzeug (V) abhängig ist;
- einen Sensor (Cvas) für die Neigungsveränderungen der Karosserie des Fahrzeugs (V), der ein Signal erzeugt, das jeder Neigungsveränderung entspricht;
- ein Stellglied (Act), das durch das vom Sensor für die Neigungsveränderungen der Fahrzeugkarosserie (Cvas) erzeugte Signal gesteuert wird und auf die Erfassungsvorrichtung (Dd) einwirkt, um die Erfassungsebene (Pd), unabhängig von den Neigungsveränderungen, parallel zur Straße (Ch) zu halten;

- Verarbeitungsmittel (Mtr) zur Verarbeitung des Signals, das durch den Sensor für die Neigungsveränderungen der Fahrzeugkarosserie (Cvas) erzeugt wird, und des Signals, das durch die Erfassungsvorrichtung (Dd) erzeugt wird;

- Rechen- und Steuerungsmittel (Ord) zur Steuerung des Betriebs des Systems und zur Berechnung der Position des Objekts (Obj), bezogen auf das Fahrzeug (V), ausgehend von dem durch die Erfassungsvorrichtung (Dd) erzeugten Signal, wie es durch die Verarbeitungsmittel (Mtr) verarbeitet wird;

- Schnittstellenmittel (I) zum Fahrer (H) des Kraftfahrzeugs (V), deren Aufgabe darin besteht, den Fahrer (H) über das Vorliegen des Risikos einer Kollision mit dem vorgenannten Objket (Obj) zu informieren.

2. System nach Anspruch 1,**dadurch gekennzeichnet**, daß die Erfassungsvorrichtung (Dd) die folgenden Teile umfaßt:

- eine Strahlungsquelle (S) für eine mit hoher Frequenz amplitudenmodulierbare elektromagnetische Strahlung;

- eine Speisevorrichtung (Alm) für die Strahlungsquelle (S);

- eine Vorrichtung (Osc) zur Modulation der Amplitude der durch die Strahlungsquelle (S) abgestrahlten Strahlung;

- eine optische Vorrichtung (Opt) zur Projektion der modulierten Strahlung, die durch diese Strahlungsquelle (S) abgestrahlt wird, auf die äußere Umgebung des Fahrzeugs (V) in dessen Fahrtrichtung;

- eine Auffangvorrichtung (Dcl) für das entlang der Erfassungsebene (Pd) erfolgende Auffangen der modulierten Strahlung, die durch das Objekt (Obj) der von der Quelle (S) bestrahlten Umgebung reflekiert wird;

- eine Mehrzahl von Sensoren ($c_1$, ... $c_n$) für die so aufgefangene reflektierte modulierte Strahlung, wobei diese Sensoren entlang einem Segment (B) aufeinander ausgerichtet sind, das vor der Auffangvorrichtung (Dcl) angeordnet und in der Erfassungsebene (Pd) enthalten ist, und zwar quer zur Fahrtrichtung des Fahrzeugs, wobei jeder Strahlungssensor in der Erfassungsebene einen vorgegebenen Teilsuchwinkel ($\alpha_i$) der Umgebung absucht, um die Strahlung zu erfassen, die entlang einer Richtung reflektiert wird, die in diesem Teilsuchwinkel ($\alpha_1$) enthalten ist, und ein Signal erzeugt, das von der Position des Objekts, auf dem die Strahlung reflektiert wird, das heißt von seiner Entfernung, bezogen auf das Fahrzeug (V), abhängig ist.

3. System nach Anspruch 2,**dadurch gekennzeichnet**, daß die Verarbeitungsmittel (Mtr), die das durch die Erfassungsvorrichtung (Dd) erzeugte Signal verarbeiten, die folgenden Teile umfassen:

- eine Mehrzahl von Verstärkern ($Amp_1$, ... $Amp_n$), die jeweils einem Sensor ($c_1$, ... $c_n$) für die reflektierte modulierte Strahlung zugeordnet sind;

- eine Demodulationsvorrichtung (Dmds) zur Demodulation des Signals, das durch jeden Sensor ($c_1$, ... $c_n$) für das reflektierte und so verstärkte Signal erzeugt wird, wobei diese Demodulationsvorrichtung (Dmds) auch das Ausgangssignal der vorgenannten Modulationsvorrichtung (Osc) empfängt und die Phasenverschiebung mißt, die zwischen diesem zuletzt genannten Signal und dem verstärkten Signal besteht, das durch jeden Sensor ($c_1$, ... $c_n$) für die reflektierte Strahlung erzeugt wird;

und daß die Steuerungs- und Rechenmittel (Ord), die insbesondere aus einem Mikroprozessor bestehen, die Position des Objekts (Obj), mit dem das Fahrzeug (V) kollidieren könnte, aus der vorgenannten Messung der Phasenverschiebung ableiten und gleichzeitig sämtliche Operationen des Systems steuern.

4. System nach Anspruch 2 oder 3, **dadurch gekennzeichnet**, daß die Erfassungsvorrichtung (Dd) die folgenden Teile umfaßt:

- eine Laserdiode als Strahlungsquelle (S) für eine mit hoher Frequenz amplitudenmodulierbare elektromagnetische Strahlung;

- Linsen zur Fokussierung der durch die Laserdiode abgestrahlten Strahlung als optische Vorrichtung (Opt) zur Projektion dieser Strahlung auf die äußere Umgebung des Fahrzeugs (V) in dessen Fahrtrichtung;

- einen Leistungsstromverstärker als Speisevorrichtung (Alm) für die Laserdiode;

- einen elektronischen Oszillator (Osc), dessen Ausgang mit dem Eingang des Leistungsstromverstärkers (Alm) verbunden ist, als Vorrichtung zur Modulation der durch die Laserdiode abgestrahlten Strahlung;

- ein stark abgeflachtes und trichterförmiges Gehäuse als Auffangvorrichtung (Acl) für das entlang der vorgenannten Erfassungsebene (Pd) erfolgende Auffangen der reflektierten Strahlung, wobei diese Ebene die Symmetrieebene dieses abgeflachten Auffangtrichters (Dcl) bildet, dessen Öffnungswinkel ($\alpha$) einem vorgegebenen Gesamtsuchwinkel für das Absuchen der äußeren Umgebung des Fahrzeugs (V) entspricht, der auf die Mehrzahl der vorerwähnten Strahlungssensoren ($c_1$, ... $c_n$) verteilt ($n\alpha_i$) ist, während die Ausgangsöffnung des Auffangtrichters (Dcl) Abmessungen aufweist, die mit den Beugungsproblemen vereinbar sind;

- eine Mehrzahl von Photozellen als Sensoren ($c_1$, ... $c_n$) für die reflektierte modulierte Strahlung, die für einen mit der Laserquelle (S) vereinbaren Frequenzbereich empfindlich sind, wobei die Photozellen ($c_1$, ... $c_n$) auf einer Leiste (B) angeordnet sind und ihre Anzahl - bei einem jeder Photozelle zugeordneten vorgegebenen Teilsuchwinkel ($\alpha_i$) - von der Querbreite (nl) der Umgebung, bezogen auf die Fahrtrichtung des Fahrzeugs (V), abhängig ist, die durch jede Photozelle ($c_1$, ... $c_n$) bei einer gegebenen Entfernung (d) des Fahrzeugs abgesucht werden soll und die in der Erfassungsebene definiert ist;

- einen Synchrondemodulator (Dmds), um das durch eine der Photozellen ($c_1$, ... $c_n$) aufgefangene Signal zu demodulieren.

5. System nach Anspruch 4, **dadurch gekennzeichnet**, daß die Verarbeitungsmittel (Mtr), die das durch die Erfassungsvorrichtung (Dd) erzeugte Signal verarbeiten, zwischen der Mehrzahl von Verstärkern ($Amp_1$, ... $Amp_n$), die der Mehrzahl von Photozellen ($c_1$, ... $c_n$) zugeordnet ist, und dem Synchrondemodulator (Dmds) einen Analogmultiplexer (Mplx) umfassen, der durch die Steuerungs- und Rechenmittel (Ord) kontrolliert wird und eine Abtastung der Umgebung entlang der Erfassungsebene (Pd)) und auf dem vorgenannten Gesamtsuchwinkel ($\alpha$) bewirkt.

6. System nach Anspruch 5, **dadurch gekennzeichnet**, daß der Sensor (Cvas) für die Neigungsveränderungen der Fahrzeugkarosserie und das Stellglied (Act) durch die entsprechenden Elementen einer Vorrichtung zur automatischen Korrektur der Ausrichtung mindestens eines Scheinwerfers des Kraftfahrzeugs (V) in Abhängigkeit von den Neigungsveränderungen der Fahrzeugkarosserie gebildet werden.

7. System nach Anspruch 6, **dadurch gekennzeichnet**, daß die Schnittstellenmittel (I) durch einen in der Nähe des Fahrers angeordneten Bildschirm und/oder durch eine akustische und/oder optische Alarmvorrichtung unter der Kontrolle der Steuerungs- und Rechenmittel (Ord) gebildet werden.

**Claims**

1. Computer-aided driving system for a motor vehicle (V), capable of predicting a collision of the vehicle with at least one object (Obj) - moving or not - in the environment external to the vehicle, liable to come into collision with the vehicle, comprising:

- a device (Dd) for detecting this object along a plane (Pd) parallel to the road (Ch) travelled by the vehicle (V), this detection device being oriented in the direction of movement of the vehicle and generating a signal which is a function of the distance (d) from the object (Obj) to the vehicle (V);

- a sensor (Cvas) of variations in attitude of the vehicle (V) generating a signal corresponding to each variation in attitude;

- an actuator (Act) controlled by the signal generated by the attitude variation sensor (Cvas) and acting on the detection device (Dd) in order to maintain the detection plane (Pd) parallel to the road (Ch), independently of variations in attitude;

- means (Mtr) for processing the signal generated by the attitude variation sensor (Cvas) and the signal generated by the detection device (Dd) ;

- means (Ord) for managing the operation of the system and for calculating the position of the object (Obj) with respect to the vehicle (V) from the signal generated by the detection device (Dd), as prepared by the processing means (Mtr);

- means (I) for incerfacing with a driver (H) of the motor vehicle (V), intended to inform the driver (H) of the existence of a risk of collision with the aforementioned object (Obj).

2. System according to Claim 1, characterised in that the detection device (Dd) comprises:

- a source (S) of electromagnetic radiation which can be amplitude modulated at high frequency;

- a device (Alm) for powering the radiation source (S);

- a device (Osc) for modulating the amplitude of the radiation emitted by the radiation source (S);

- an optical device (Opt) for projecting the modulated radiation emitted by this source (S) onto the environment external to the vehicle (V) in the direction of movement of the latter;

- a device (Dcl) for collecting, along the detection plane (Pd), the modulated radiation reflected by the object (Obj) in the environment irradiated by the source (S);

- a plurality of sensors ($c_1$ ... $c_n$) of the reflected modulated radiation collected in this way, these sensors being aligned along a segment (B) disposed upstream of the collection device (Dcl) and contained in the detection plane (Pd) transversely with respect to the direction of movement of the vehicle, each radiation sensor aiming, in the detection plane (Pd), at a pre-fixed partial environment sighting angle ($\alpha_i$), so as to pick up the reflected radiation in a direction included within this partial sighting angle ($\alpha_i$), and generating a signal which is a function of the position of the object by which the radiation has been reflected, that is to say its distance with respect to the vehicle (V).

3. System according to Claim 2, characterised in that the processing means (Mtr) which process the signal generated by the detection device (Dd) comprise:

- a plurality of amplifiers ($Amp_1$, ... $Amp_n$), each associated with a reflected modulated radiation sensor ($c_1$, ... $c_n$) ;

- a device (Dmds) for demodulating the signal generated by each sensor ($c_1$, ... $c_n$) of the radiation which is reflected and amplified in this way, this demodulation device (Dmds) also receiving the output signal from the aforementioned modulation device (Osc) and measuring the phase difference existing between the latter signal and the amplified signal generated by each reflected radiation sensor ($c_1$, ... $c_n$),

and in that the management and calculation means (Ord), notably constituted by a microprocessor, deduce the position of the object (Obj) liable to come into collision with the vehicle (V) from the aforementioned phase difference measurement, while managing all the system operations.

4. System according to Claim 2 or 3, characterised in that the detection device (Dd) comprises:

- a laser diode, as the source (S) of electromagnetic radiation which can be amplitude modulated at high frequency;

- lenses for focusing the radiation emitted by the laser diode, as the optical device (Opt) for projecting this radiation onto the environment external to the vehicle (V), in the direction of movement of the said vehicle;

- a power current amplifier, as the device (Alm) for powering the laser diode;

- an electronic oscillator (Osc), the output of which is connected to the input of the power current amplifier (Alm), as the device for modulating the radiation emitted by the laser diode;

- a very flat enclosure in the form of a funnel, as the device (Dcl) for collecting, along the aforementioned detection plane (Pd), the reflected radiation, this plane being the plane of symmetry of this flat collecting funnel (Dcl), the aperture angle ($\alpha$) of the latter corresponding to a pre-fixed overall angle of sighting of the environment external to the vehicle (V), distributed (n $\alpha_i$) amongst the plurality of aforementioned radiation sensors ($c_1$, ... $c_n$), while the output orifice of the collecting funnel (Dcl) has dimensions compatible with the problems of diffraction;

- a plurality of photoelectric cells, as sensors ($c_1$, ... $c_n$) of the reflected modulated radiation, sensitive to a range of frequencies compatible with the laser source (S), the cells ($c_1$, ... $c_n$) being disposed on a bar (B) and their number being a function - for a pre-fixed partial sighting angle ($\alpha_i$) assigned to each cell - of the transverse width (nl) of the environment, with respect to the direction of movement of the vehicle (V), at which it is wished to aim by each cell ($c_1$, ... $c_n$), at a given distance (d) from the vehicle and which is defined in the detection plane (Pd);

- a synchronous demodulator (Dmds) for demodulating the signal picked up by one or other of the cells ($c_1$, ... $c_n$).

5. System according to Claim 4, characterised in that the processing means (Mtr) which process the signal generated by the detection device (Dd) comprise, between the plurality of amplifiers ($Amp_1$, ... $Amp_n$) associated with the plurality of cells ($c_1$, ... $c_n$) and the synchronous demodulator (Dmds), an analogue multiplexer (Mplx), controlled by the management and calculation means (Ord) and providing scanning of the environment along the detection plane (Pd) and over the aforementioned overall sighting angle ($\alpha$).

**6.** System according to Claim 5, characterised in that the aforesaid vehicle attitude variation sensor (Cvas) and actuator (Act) are constituted by the corresponding elements of a device for automatic correction of the orientation of at least one headlight of the motor vehicle (V) according to attitude variations.

**7.** System according to Claim 6, characterised in that the interface means (I) are constituted by a screen, situated in proximity to the driver, and/or an acoustic and/or visual alarm, under the control of the management and calculation means (Ord).

FIG.1

$$d_1 \simeq d_2 = d$$

**FIG.2**

FIG.3

FIG.4

FIG. 5